# EUROPÄISCHE PATENTANMELDUNG

(11) **EP 0 529 207 A1**
(43) Veröffentlichungstag der Anmeldung: **03.03.1993**
(21) Anmeldenummer: 92108897.7
(22) Anmeldetag: 27.05.1992
(51) Int. Cl.: H04J 3/14

(54) **Verfahren zum Steuern und Überwachen eines Nachrichtenübertragungsnetzes**

(30) Priorität: 05.06.1991 DE 4118356
(71) Anmelder: ROBERT BOSCH GMBH, 70442 Stuttgart (DE)
(72) Erfinder: Derenbach, Heinz, Dr. rer. nat., W-7150 Backnang (DE); Noller, Markus, Dipl.-Ing., W-7153 Weissach im Tal (DE)

(57) **Zusammenfassung**

Verfahren zum Steuern und Überwachen eines Übertragungsnetzes mit Hilfe eines Datenkommunikationsnetzes, mit Bildschirm und graphischem Editor, wobei das Netz auf dem Bildschirm symbolisch abgebildet ist und bestimmte Symbole für bestimmte Baugruppen und Linien für Leitungen verwendet werden und wobei Betriebszustände abfragbar sind, unter Verwendung der Fenstertechnik, dadurch gekennzeichnet, daß entsprechend der Netzanforderungen Symbole in einem Fenster frei plaziert und mittels Strichen vernetzt werden, daß überprüft wird auf zur Verfügung gestellte Kapazität und auf zulässige Verbindungen und daß auf dem Bildschirm vorgenommene Änderungen der Netz- und Schaltkonfiguration jeweils das unmittelbare Auslösen von Schaltkommandos an die betreffenden Funktionsblöcke bewirken.
Vorteil der einheitlichen Benutzeroberfläche und Bedienerführung, großer Bedienerkomfort, übersichtliche Darstellung interner Konfigurationen von Netzelementen, deren innerer Schaltzustände und Signalverläufe sowie Vorteil der einfachen Handhabung selbst komplexer Netzelemente auch durch den ungeübten Anwender. Einsatz bei allen vorkommenden schaltbaren Netzelementen insbesondere der digitalen Übertragungstechnik, hierbei sowohl in der plesiochronen wie auch in der synchronen digitalen Hierarchie.

## Beschreibung

Die Erfindung betrifft ein verfahren zum Steuern, Überwachen und Konfigurieren eines Nachrichtenübertragungsnetzes gemäß Oberbegriff des Anspruches 1. Solche verfahren sind bekannt.
Die Schwierigkeit liegt bei solchen Verfahren darin, für den Anwender eine einheitliche und leicht bedienbare Benutzeroberfläche zur Darstellung interner Schaltzustände in den Netzelementen aber auch zum Ändern des Beschaltungszustandes, zum Auftrennen oder zur Neubeschaltung zur Verfügung zu stellen.
Bekannte Steuer- und Überwachungsverfahren bauen zumeist auf Matrixdarstellungen, verbindungslisten, welche viel Text enthalten, auf der Auswahl und Zuordnung vorhandener Ports auf.
Diesen verfahren mangelt es zumeist an Übersichtlichkeit bei der Darstellung der inneren Strukturen und Verbindungen, oder es sind übergeordnete Gesamtzusammenhänge nicht erkennbar. Solche Verfahren sind ungeeignet für die Darstellung von ineinander verschachtelten Hierarchieebenen und erreichen praktisch auch keine Einheitlichkeit in der Darstellung.

Der vorliegenden Erfindung lag die Aufgabe zugrunde, ein Verfahren der eingangs genannten Art anzugeben, welches in der Lage ist, interne Konfigurationen von Netzelementen, deren innere Schaltzustände und Signalverläufe übersichtlich darzustellen. Auf der Basis dieser Darstellung sollen in komfortabler Weise Konfigurationsänderungen vorgenommen und die entsprechenden Schaltvorgänge ausgelöst werden können.

Diese Aufgabe wurde gelöst durch die Merkmale des Anspruches 1. Vorteilhafte Ausgestaltungen ergeben sich durch die Unteransprüche.

Das erfindungsgemäße Verfahren weist die Vorteile auf, daß sowohl Netzkonfigurationen als Übersicht, als Detail, interne Konfigurationen von Netzelementen, deren inneren Schaltzustände und Signalverläufe übersichtlich darstellbar sind. Auf der Grundlage dieser übersichtlichen Darstellung können Konfigurationsänderungen in unschwerer Weise vorgenommen und die dazu notwendigen Schaltvorgänge ausgelöst werden. Eine einfache und einheitliche Handhabung selbst komplexer Netzelemente wird auch dem ungeübten Anwender ermöglicht.

Die Anwendung des erfindungsgemäßen Verfahrens ist nicht an bestimmte Gerätetypen gebunden, sondern offen für zukünftige Gerätegenerationen insbesondere der digitalen Übertragungstechnik, und zwar sowohl in der plesiochronen (PDH) wie auch in der synchronen digitalen Hierarchie (SDH).
Das erfindungsgemäße Verfahren beruht auf der Idee, mit Hilfe eines graphischen Editors und der Fenstertechnik Funktionsblöcke den Erfordernissen des Netzanwenders entsprechend frei zu plazieren und durch Verbindungslinien miteinander zu verschachteln. Durch Analogie zwischen Funktionsblöcken, Gerätebaugruppen bzw. Gerätefunktionen sowie zwischen Linien und Leitungen ist es damit auch ungeübten Bedienern möglich, die Führung von insbesondere digitalen Signalverbindungen in diesen Geräten zu verstehen und betrieblich zu steuern. Mit einer Änderung einer graphischen Darstellung wird unmittelbar das Schaltkommando an das Gerät abgesetzt. Selbstverständlich kann die graphische Darstellungsweise der Funktionsblöcke kundenspezifisch geändert werden, dies betrifft Text- oder Baugruppen.

Es folgt nun die Beschreibung anhand der Figuren.
Sämtliche Figuren beziehen sich auf das Fallbeispiel des Einsatzes des erfindungsgemäßen Verfahrens für die Steuerung und Überwachung eines synchronen oder plesiochronen digitalen Netzes (SDH- bzw. PDH-Hierarchie).
Die Figur 1 zeigt das Schirmbild eines Schalteditors für einen Add/Drop-Multiplexer und zwar im Darstellungsmodus, währen die Figur 2 den Schalteditor im Schaltmodus zeigt, ebenfalls für denselben Multiplexer.
In Figur 3 sind mehrere Macros dargestellt, davon in Fig.3a) ein Macro für synchrone Ports bidirektional, in der Figur 3b) ein solcher in unidirektional und Figur 3c) einen richtungsgetrennten Macro.
In Figur 4 ist ein Vierfachmultiplexer symbolhaft dargestellt, während in Figur 5 ein plesiochroner Port mit Map-Funktion gezeichnet ist. Die Figur 6 zeigt einen bidirektionalen 4-fach-Assembler. In Figur 7 ist eine Cross Connection angezeichnet, während die Figur 8 das Hinzufügen eines Assemblers an einen Multiplexer Port illustriert.
Die Figuren 9 und 10 zeigen Beispiele für die Darstellung eines synchronen Multiplexers als SMT, das heißt synchrone Multiplexer Termination bzw. als ADM das heißt Add-Drop-Multiplexer.
In Figur 11 wird die Einspeisung eines VC 3-Multiplexbitstroms, der aus einem STM-1 Signal stammt, in einen synchronen Ring veranschaulicht.
Die Figuren 12 und 13 zeigen die symbolische Darstellung für herkömmliche plesiochrone Multiplexer und Leitungsausrüstungen.

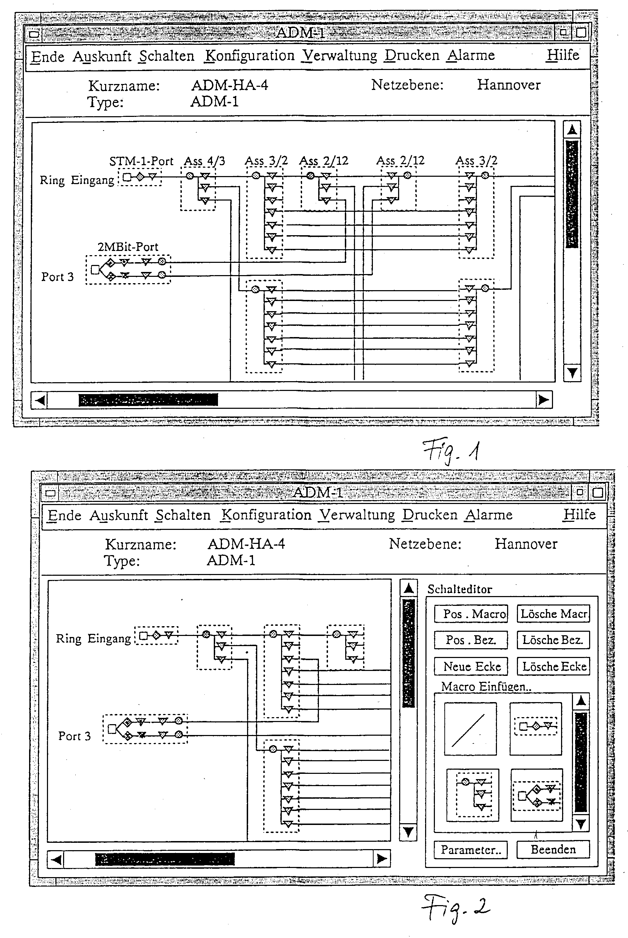

In Figur 1 ist das Beispiel eines Schalteditors für einen Add-Drop-Multiplexer-1 im Darstellungsmodus und in Figur 2 im Schaltmodus wiedergegeben. In diesem Schalteditor wird der Schaltungszustand des Netzes durch eine graphische Repräsentation der Termination Points, also Ein- bzw. Ausgänge (Ports) von Baugruppen durch Symbole und der Verbindung dieser Baugruppen durch Linien dargestellt. Zur weiteren Vereinfachung für den Bediener werden die Termination Points TP zu Funktionsblöcken, im weiteren Verlauf Macros genannt, zusammengefaßt. Die Verbindungen innerhalb dieser Macros sind fest und vom Bediener nicht änderbar. Im Gegensatz dazu lassen sich die Linien, die verschiedene Macros verbinden, im Schalteditor vom Bediener ändern. Diese Verbindungen zwischen Macros stellen also den aktuellen Schaltzustand innerhalb des Netzelementes dar.
Im Darstellungsmodus wird der aktuelle Schaltzustand dargestellt. Schaltungen können hier nicht vorgenommen werden. Durch Anklicken von Termination Points TP kann der Bediener über Popup-Menüs beispielsweise Qualitätsdaten oder Alarminformationen, die diesen Termination Point treffen, abrufen. Die Termination Points weisen nicht nur verschiedene Formen auf, welche die unterschiedlichen Arten symbolisieren, sondern auch unterschiedliche Farben in Abhängigkeit von dem jeweiligen Beschaltungs- bzw. Alarmzustand. Außerdem werden unidirektionale Termination Points durch einen Punkt oder ein Kreuz für Sink bzw. Source dargestellt. Jeweils mehrere Termination Points werden durch einen gestrichelten Rahmen als Macro zusammengefaßt.

Im Schaltmodus befindet sich ein Editierpanel am rechten Rand des Fensters. Der Bediener kann jetzt zusätzliche Macros aus einer Macrobibliothek entnehmen und in das Schaltfeld einfügen. Schaltaktionen werden dann durch das Ziehen von Linien zwischen Termination Points ausgelöst. Dabei überwacht der Schalteditor, ob für das Einfügen neuer Macros noch genügend Systemressourcen verfügbar sind und ob die Schaltaktion, die der Benutzer durchführen will, möglich ist. Der Schaltmodus kann nur von entsprechend priviligierten Benutzern aktiviert werden.
Im Editierpanel sind im wesentlichen drei verschiedene Arten von Macros verfügbar, nämlich Ports, Assembler und Cross Connections. Die Ports des Systems werden bei der Installation des Überwachungssystems entsprechend der Größe, des Ausbaus und der Anzahl wie sie eingesetzt sind, eingerichtet. Die zur Auflösung der höherratigen Signale benötigten Assembler, können jederzeit eingefügt und entsprechend "verkabelt" werden. Cross Connections werden dann benötigt, wenn zwei (gleiche) plesiochrone bzw. synchrone Ports miteinander verbunden werden sollen.

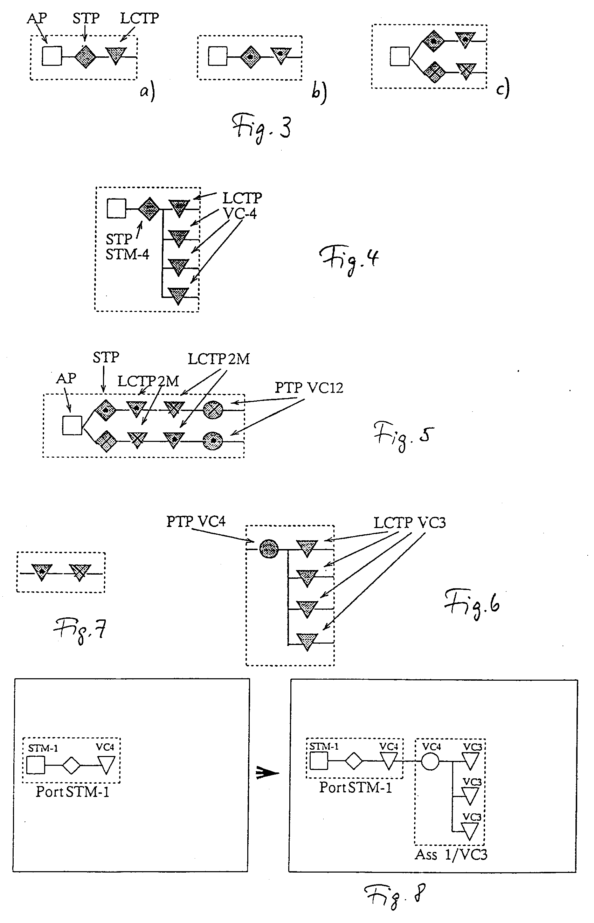

Die Figur 3 zeigt Beispiele von Macros für synchrone Ports, in Figur 3a) bidirektional, in Figur 3b) undirektional und in Figur 3c) richtungsgetrennt. Links ist jeweils ein Access Point AP als Quadrat erkennbar, daran angeschlossen ist jeweils ein Section Termination Point STP als Raute, welcher ein Link Connection Termination Point LCTP als ein auf der Spitze stehendes Dreieck folgt. Im Innern der Symbole befindet sich zur Richtungskennzeichnung entweder ein Punkt für Senke oder ein Kreuz für Quelle. Darüber hinaus wird durch farbige Füllung der Symbole der Verbindungs- bzw. Alarmzustandes signalisiert. Unidirektionale Ports befinden sich auf den Common Modules und bidirektionale Port auf den AMS. Sind die Ports plesiochron, so enthält der Macro neben AP, STP LCTP auch noch einen Path Termination Point PTP und einen Link Connection Termination Point LCTP für den entsprechenden VC.
Im Section Termination Point STP wird die "Section" terminiert; dementsprechend ist hier die Information, welche die Section betrifft sichtbar. So kann hier über ein Popup die MSTP-bezogene Alarmierung, Performance-Messung, Schwellwerteinstellung und ähnliches durchgeführt werden.
Entsprechend der Hierarchie gibt es die folgenden Typen von synchronen Ports: STM-1-Port, STM-4-Port und STM-16-Port; die Figur 4 zeigt einen STM-4-Port.
Map-Funktionen, die plesiochrone Signale in VCs einfügt, werden nicht vom Benutzer plaziert, sondern sind fester Bestandteil der plesiochronen Ports. Ein solcher Macro ist in Figur 5 dargestellt. Hier beziehen sich der links erkennbare Section Termination Point STP und der daneben liegende Link Connection Termination Point LCTP auf den Link außerhalb des synchronen Netzes, während der zweite LCTP rechts daneben den Link der 2MBit Verbindung durch das synchrone Netz hindurch kennzeichnet. Der daneben liegende Path Termination Point PTP bildet das Ende der VC-12 Verbindung im synchronen Netz, das dieses 2-MBit Signal trägt. Entsprechend der Hierarchie gibt es drei verschiedene Typen von plesiochrenen Ports nämlich 2-MBit-,34-MBit- und 144-MBit-Ports.

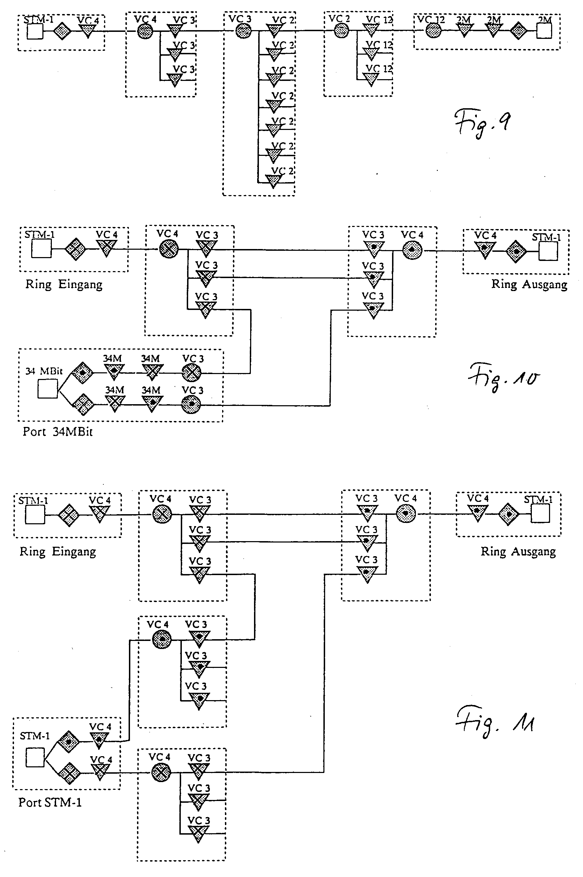

In Figur 6 ist eine Assemblerfunktion dargestellt, nämlich eine bidirektionale 4-fache. Eine Assemblerfunktion besteht aus einem PTP der höheren Hierarchie und aus mehreren LCTPs der nächst niederen Ebene, wobei die Anzahl der LCTPs aus der gewählten Paarung von Hierarchieebenen resultiert. Ein Assembler-Block besteht aus einem PTP, in dem der Pfad aufgelöst wird, und ist stets eine Hierarchieebene höher als die LCTPs, welche die bei der Auflösung aufgetretenen Link-Connections beschreiben. Auf dem PTP können Performance-Informationen mittels eines Popups abgerufen bzw. Schwellwerte eingestellt werden. Es gibt die folgenden Typen:
Assembler VC4/VC3
Assembler VC3/VC2 bzw. TUG2
Assembler VC2/VC12.

Die Figur 7 zeigt eine Cross Connection, welche aus zwei LCTPs besteht, jeweils mit unterschiedlicher Richtung. Eine Cross Connection ist erforderlich, da die lokale Verbindung zweier Ports in einem synchronen Multiplexer Zeitschlitze auf dem Add-Drop-Bus belegt, die durch diesen Macro verwaltet werden.
Cross Connections gibt es für VC12, VC2, VC3 und VC4.

Bei der Bedienung des Schalteditors werden Port-, Assembler- und Cross Connect-Funktionen aus einem Panel eingesetzt und dann mit Linien "verkabelt". So kann durch einfaches Einsetzen eines Assemblers und durch eine Verbindung der von außen zugänglichen Anschlüsse dieses "Macros" eine Aufteilung des STM-1-Signals in drei VC3 Signale durchgeführt werden. Für den Bediener ist diese Bedienweise sehr anschaulich, da sie mit dem Vorgehen bei konventioneller Multiplexhardware vergleichbar ist: "Gerät einsetzen und verkabeln". Dies ist in Figur 8 veranschaulicht.

Bei der Verbindung von Funktionsblöcken (Macros) kann nicht jeder Macro-Anschluß mit jedem verbunden werden. Es gelten daher folgende Regeln:
Beide Anschlüsse müssen die gleiche Hierarchieebene haben.
Man darf LCTP mit LCTP oder mit PTP verbinden. PTP auf PTP ist illegal.
Die Richtung muß übereinstimmen:
- LCTP auf LCTP nur mit unterschiedlicher Richtung (Quelle auf Senke).
- LCTP auf PTP nur mit gleichen Richtungen (Quelle auf Quelle bzw. Senke auf Senke).
- bidirektional ist beides zulässig - kommt aber im synchronen ADM nicht vor.

Sollte der Bediener eine dieser Regeln verletzen oder eine durch die Hardware begründete Restriktion mißachten, so wird die Verschaltung der entsprechenden Blöcke mit einer Fehlermeldung abgewiesen.

Im folgenden wird die Bedienung eines synchronen Multiplexers in der Anwendung als SMT, ADM und LXC gezeigt.

Ein SMT ist ein Multiplexer am Ende einer STM-n-Leitung.
Dieser Multiplexer dient lediglich zur Auflösung des STM-n-Signals und zur Aufteilung auf Ports. Die Funktion ist daher grundsätzlich bidirektional; eine Verbindung plesiochroner Ports untereinander ist nich erforderlich. Die Figur 9 zeigt beispielhaft die Auflösung eines STM-1-Signals in einen 2-Mbit-Unterkanal.

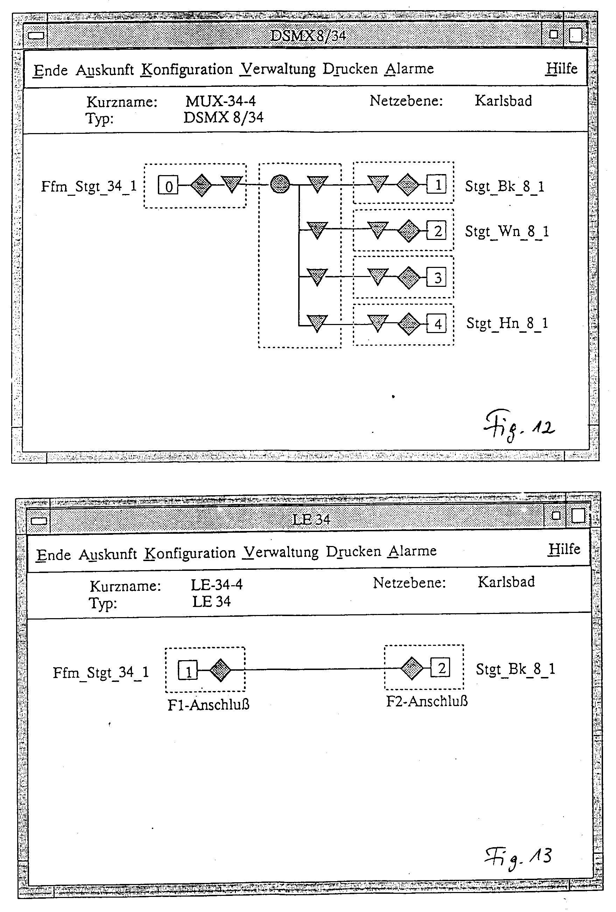

Der ADM (Add-Drop-Multiplexer) wird in eine unidirektionale Leitung, die als Ring umläuft eingeschleift. Die meist Antiparallel dazu umlaufende Redundanzverbindung wird ggf. zur vollautomatischen Ersatzschaltung genutzt; sie ist daher hier weder sich-noch bedienbar. Auch hier ist eine Verbindung plesiochroner Ports nicht erforderlich. Die Figur 10 zeigt beispielhaft die Herauslösung eines 34MBit-Signals aus einem STM-1-Signal.

Der LXC bietet über die Funktionen des ADM hinaus noch die Möglichkeit, Lokalverkehr der plesiochronen Ports bzw. des STM-1-Ports zu schalten. Ansonsten ist der LXC in den Ring eingebunden wie ein normaler ADM. In Figur 11 wird an einem 2-MBit-Signal beispielhaft die Verschaltung des Lokalverkehrs demonstriert
(Einspeisung eines VC3 aus einem STM-1 in den Ring).

Der flexible Multiplexer PCM 30 CC ist ein Cross Connect System, das die Verteilung von 64-kBit-Signalen gestattet. Es besitzt Ein- und Ausgänge auf der 64kBit- und der 2MBit-Ebene und erlaubt beliebige Verschaltung der 64kBit (Unter-)kanäle.

## Patentansprüche

1. Verfahren zum Steuern und Überwachen eines Nachrichtenübertragungsnetzes und zum Konfigurieren der Verkehrsbeziehungen in einem solchen Übertragungsnetz mit Hilfe eines Datenkommunikationsnetzes (Melde- und Steuerbefehlsübertragungssystem (Fernwirksystem), welches Meldeinformationen vom Übertragungsnetz in einen Computer liefert und welches Befehlsinformationen vom letzteren zum Schalten, Trennen und Verbinden von Nachrichtenwegen in diesem Netz überträgt und durchführt), mit Bildschirm und graphischem Editor, wobei die Netztopologie und der interne Beschaltungszustand der Netzelemente auf dem Bildschirm abbildbar sind, indem für bestimmte Funktionsblöcke wie Geräte, Leitungen und Baugruppen spezifische einheitliche Symbole verwendet werden, und wobei Schaltzustände, Betriebs- und Alarmzustände usw. abfragbar sind, unter Verwendung der Fenstertechnik, dadurch gekennzeichnet, daß mittels des graphischen Editors die den Funktionsblöcken entsprechenden Symbole den Erfordernissen des Netzes und den Beschaltungen entsprechend in einem Fenster frei plaziert und durch die den Leitungen entsprechende Linien mit den anderen Funktionsblöcken verbunden (vernetzt) werden,
daß bei der Beschaltungsänderung (Vernetzung) durch den Editor dahingehend untersucht wird, ob die miteinander zu verbindenden Schnittstellen und/oder Ports bzw. Termination Points (TP) der Funktionsblöcke zueinander kompatibel sind, und daß die auf dem Bildschirm vorgenommenen und angezeigten zulässigen Verbindungen und Änderungen der Netzkonfiguration jeweils das Auslösen von Schaltkommandos an die betreffenden Funktionsblöcke und Leitungen bewirken.

2. Verfahren nach Anspruch 1, dadurch gekennzeichnet, daß die einzelnen Symbole in Abhängigkeit vom Beschaltungs- und/oder Qualitäts- bzw. Alarmzustand in unterschiedlichen Farben angezeigt werden.

3. Verfahren nach einem der vorhergehenden Ansprüche, dadurch gekennzeichnet, daß Schnittstellen und/oder Ports bzw. Termination Points (TP) der Funktionsblöcke mit unterschiedlichen Zusatzsymbolen (., x) gekennzeichnet werden, wenn sie unidirektional als Quelle oder Senke betrieben werden.

4. Verfahren nach einem der vorhergehenden Ansprüche, dadurch gekennzeichnet, daß das Auslösen der Schaltkommandos durch das Ziehen von Verbindungslinien auf dem Bildschirm erfolgt.

5. Verfahren nach einem der vorhergehenden Ansprüche, dadurch gekennzeichnet, daß durch den Editor überwacht wird, ob für das geplante Einfügen zusätzlicher Funktionsblöcke und das Vernetzen mit Leitungen die Systemressourcen ausreichen und ob die geplante Schaltaktion möglich ist.

6. Verfahren nach einem der vorhergehenden Ansprüche, dadurch gekennzeichnet, daß in den einzelnen Funktionsblöcken Performance-Informationen abgerufen, angezeigt und Schwellwerte eingestellt werden.

7. Verfahren nach Anspruch 6, dadurch gekennzeichnet, daß Abruf, Anzeige und Einstellung mittels eines POPUP erfolgt.
